# EUROPEAN PATENT APPLICATION

(11) **EP 4 414 425 A1**
(43) Date of publication of application: **14.08.2024**
(21) Application number: 22878530.9
(22) Date of filing: 04.10.2022
(51) Int. Cl.: C08L 97/02, C08J 5/18

(54) **LIGNOCELLULOSE SOLUTION AND SHAPED ARTICLE, AND PRODUCTION METHOD THEREFOR**

(30) Priority: 04.10.2021 WO PCT/JP2021/036631
(71) Applicant: Daicel Corporation, Osaka 530-0011 (JP); Kyoto University, Kyoto-shi, Kyoto 606-8501 (JP)
(72) Inventor: NAKAGAWA, Yuka, Tokyo 108-8230 (JP); KITAYAMA, Kenji, Tokyo 108-8230 (JP); HASHIZUME, Tomohiro, Tokyo 108-8230 (JP); WATANABE, Takashi, Kyoto-shi, Kyoto 606-8501 (JP); KOBAYASHI, Naoko, Kyoto-shi, Kyoto 606-8501 (JP)
(74) Representative: Hoffmann Eitle
(86) International application number: PCT/JP2022/037190
(87) International publication number: WO 2023/058662

(57) **Abstract**

A lignocellulose solution is produced by a production method including: coarsely pulverizing a biomass containing lignocellulose to obtain a coarse powder; mixing the coarse powder with an organic acid; and dissolving the coarse powder in the organic acid. A molded article containing lignocellulose as a main component is formed from this solution. The molded article has a density of less than 1.20 g/cm³. In one embodiment, the molded article is substantially free of an adhesive component. In another aspect, cellulose, hemicellulose, and lignin constituting the lignocellulose form an ester bond with an organic acid. A molded article according to still another embodiment has a density of less than 1.60 g/cm³ and an amount of functional groups bound to cellulose, hemicellulose, and lignin of 0.35 or more and 0.60 or less.

## Description

### Technical Field

The present disclosure relates to a method for solubilizing lignocellulose, and to a lignocellulose solution and a molded article obtained by this method.

### Background Art

In recent years, there has been a demand for development of materials derived from biomass resources in place of materials derived from petroleum resources due to increased concern on environmental problems. In particular, there has been a demand for utilization of a woody biomass that does not compete with food and does not increase carbon dioxide in the atmosphere.

The main component of a woody biomass is a natural polymer mixture called lignocellulose. The lignocellulose forms a strong higher-order structure in which cellulose, hemicellulose, and lignin are intricately intertwined. Specifically, in the lignocellulose, celluloses, which are linear polymers, form crystal structures by intramolecular and intermolecular hydrogen bonds and constitute strong microfibrils, which are intertwined with hemicelluloses such as xylan and glucomannan; further, lignins, which are irregular aromatic polymers, fill voids in matrixes of these polysaccharides, thereby forming a strong composite. Therefore, the whole lignocellulose is not dissolved in a solvent such as water or an organic solvent under mild conditions. The dissolution of the whole lignocellulose in these solvents requires a pretreatment for physically breaking down plant cell walls by a grinding treatment with a ball mill or the like or a pretreatment for separating cell wall components by a high-temperature reaction in a solvent containing a catalyst. A heavy load on energy and cost required for the grinding treatment or the high-temperature reaction has been a serious problem in utilization of a woody biomass.

As described above, for the purpose of dissolving lignocellulose, studies have been made to promote a decomposition reaction by relaxing the hydrogen bonds through chemical decomposition at a high temperature. For example, attempts have been made to dissolve lignocellulose by using a high-temperature heating treatment in an organic solvent, a decomposition reaction with an acid or an alkali, a hydrothermal reaction at a high temperature, or the like.

Patent Document 1 (JP 3155603 B) discloses a method for producing a liquefied solution of a lignocellulose material such as wood by heating the lignocellulose material in the presence of an acid catalyst, a cyclic ester, and a polyhydric alcohol. This method is a wood liquefaction method in which acid decomposition of wood is promoted in chemicals, and requires use of an acid catalyst such as sulfuric acid and a polyhydric alcohol-based chemical such as polyethylene glycol and heating to a reaction temperature of about 150°C.

Patent Document 2 (JP 11-181105 A) proposes a method for producing a lignocellulose molded article by pretreating a pulp containing about 5% of lignin with an aqueous alkali solution, adding carbon disulfide to dissolve the pulp, and then coagulating and regenerating it as a technique for producing a lignocellulose molded article having an arbitrary shape by improving the moldability of lignin-bound cellulose.

For structural analysis of lignin, an analytical technique called a ground lignin or milled wood lignin extraction method using a ball mill is known as a method for extracting lignin from wood in a state close to its natural state. For example, Non-Patent Literature 1 (Green Chemistry 16, 3569 (2014)) describes a method for solubilizing fine wood flour pulverized using a ball mill in formic acid. Specifically, Non-Patent Literature 1 describes a method in which wood finely pulverized using a ball mill is dissolved, at room temperature, in pyruvic acid, which is an α-keto acid, and glyoxylic acid and formic acid, which are aldehyde-based carboxylic acids. This literature also describes that a transparent film was produced from the obtained wood solution. In Non-Patent Literature 2 (ACS Sustainable Chem. Eng. 5, 12, 11536 (2017)), finely pulverized beechwood is directly dissolved in formic acid at room temperature over 4 to 7 days. Non-Patent Literature 2 also describes that a transparent flat plate-shaped woody film produced by evaporating a solvent from this solution can be folded and used as an origami.

The lignocellulose membrane disclosed in Patent Document 3 (JP 04-33986 A) is described, which is typically produced by adding a concentrated aqueous alkali solution and carbon disulfide to lignocellulose fibers obtained, for example, by cracking hardwood chips, and dissolving the lignocellulose fibers, followed by coagulation and regeneration. In Patent Document 4 (JP 2003-104815 A), a soluble lignocellulose material is produced by adding a phenol to a lignocellulose material, followed by a heating reaction. Patent Document 5 (JP 2008-308530 A) proposes a method for producing soluble lignocellulose by grinding a lignocellulose fiber material using a mechanical grinding means until the molecular weight of lignocellulose reaches 10000 or less.

### Citation List

### Patent Document

Patent Document 1: JP 3155603 B
Patent Document 2: JP 11-181105 A
Patent Document 3: JP 04-33986 A
Patent Document 4: JP 2003-104815 A
Patent Document 5: JP 2008-308530 A

### Non-Patent Literature

Non-Patent Literature 1: Yuri Nishiwaki-Akine and Takashi Watanabe, "Dissolution of wood in α-keto acid and aldehydic carboxylic acids and fractionation at room temperature", Green Chemistry, 16, 3569 (2014)

Non-Patent Literature 2: Y Nishiwaki-Akine, S. Kanazawa, T. Uneyama, K. Nitta, R. Yamamoto-Ikemoto, and Takashi Watanabe, "Transparent woody film made by dissolution of finely divided Japanese beech in formic acid at room temperature", ACS Sustainable Chem. Eng. 5, 12, 11536 (2017)

### Summary of Disclosure

### Technical Problem

In Patent Documents 1 to 4, a chemical such as an organic solvent, which may cause a load on the environment, is used for dissolving lignocellulose. In Patent Document 5 and Non-Patent Literatures 1 and 2, such an organic solvent is not used, but long-time pulverization using a ball mill is required for lowering the molecular weight of lignocellulose and solubilize it, which is industrially difficult. It is considered that the long-time pulverization by the ball mill causes the cell wall of the lignocellulose to be pulverized, and further causes the cellulose type I crystal structure of cellulose contained in lignocellulose to be broken, thereby decreasing crystallinity. In addition, J. Zehr, "Handbuch der Raumexplosionen, Abschnitt IIb, Eigenschaften brennbar Staube und Nebel in Luft" p. 164 (1965) describes a flammable fine powder of conifer pine having a particle size of from 70 to 150 µm and a flammable fine powder of beech having a particle size of from 70 to 100 µm or less. A flammable fine powder of wood may be generated by ball milling, and there is a concern that scattering of the fine powder may affect an operating environment. From the viewpoint of improvement in energy efficiency and cost reduction, and further from the viewpoint of improvement in safety of operators, there is a room for further improvement in technique for utilizing a woody biomass.

An object of the present disclosure is to provide, as a method for utilizing a woody biomass, a method for producing a lignocellulose solution and a molded article, which have a low load on the environment and operators and are also advantageous in terms of energy. Another object of the present disclosure is to provide a lignocellulose solution and a molded article which have high industrial applicability and a low environmental load.

### Solution to Problem

The present inventors have found that a variation in pressure applied to a biomass containing lignocellulose significantly improves solubility of the biomass in an organic acid and enables even a coarsely pulverized biomass to be solubilized, thereby completing the production method and the molded article of the present disclosure. Furthermore, the present inventors have found that, even in the case of a coarsely pulverized biomass, the concentration of an organic acid used in dissolution affects the dissolution state of the coarse powder, and have completed the present disclosure.

That is, a method for producing a lignocellulose solution of the present disclosure includes:
(1) coarsely pulverizing a biomass containing lignocellulose to obtain a coarse powder;
(2) mixing the coarse powder with an organic acid; and
(3) dissolving the coarse powder in the organic acid.

From another viewpoint, a lignocellulose-containing molded article of the present disclosure contains lignocellulose as a main component, and has a density of less than 1.20 g/cm³. A molded article according to an embodiment is substantially free of an adhesive component. In a molded article according to another embodiment, at least parts of cellulose, hemicellulose, and lignin, which are constituent components of the lignocellulose, form an ester bond with an organic acid.

From still another viewpoint, the lignocellulose-containing molded article of the present disclosure may contain lignocellulose as a main component and have a density of less than 1.60 g/cm³. In the molded article according to this embodiment, a functional group represented by the following formula (1) is bound to at least some of hydroxyl groups of cellulose, hemicellulose, and lignin constituting the lignocellulose 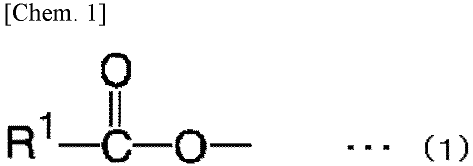 where R¹ is a hydrogen atom or a functional group represented by the following formula (2) where R² is a hydrogen atom or a methyl group 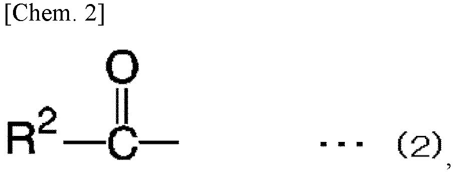 and
a binding amount of the functional group as determined from an infrared absorption spectrum is 0.35 or more and 0.60 or less.

### Advantageous Effects of Disclosure

The production method of the present disclosure makes it possible to obtain a lignocellulose solution and a molded article without finely pulverizing a biomass as a raw material over a long period of time and without using a chemical having a heavy environmental load. The lignocellulose solution and the molded article obtained by the production method can exhibit physical properties of cellulose, lignin, and the like constituting lignocellulose. Furthermore, the dissolution state of the lignocellulose can be controlled.

### Brief Description of Drawings

FIG. 1 is a photograph showing a coarse powder of a biomass obtained in pulverization of a production method according to an embodiment of the present disclosure.
FIG. 2 is a photograph showing a solubilized lignocellulose-containing solution obtained by dissolving the coarse powder of FIG. 1.
FIG. 3 is a photograph of a solubilized lignocellulose-containing sheet formed from the solubilized lignocellulose-containing solution of FIG. 2.
FIG. 4 includes electron micrograph images showing a surface state of the sheet of FIG. 3, whose magnifications are 500 times for FIG. 4a and 1000 times for FIG. 4b.
FIG. 5 includes electron micrograph images showing a cross section of the sheet of FIG. 3, whose magnifications are 100 times for FIG. 5a and 300 times for FIG. 5b.
FIG. 6 includes electron micrograph images showing a surface state of a sheet of Comparative Example 1, whose magnifications are 500 times for FIG. 6a and 1000 times for FIG. 6b.
FIG. 7 includes electron micrograph images showing a cross-sectional state of the sheet of Comparative Example 1, whose magnifications are 300 times for FIG. 7a and 1000 times for FIG. 7b.
FIG. 8 is an example of a multidimensional nuclear magnetic resonance spectrum of a lignocellulose-containing molded article.
FIG. 9 is a structural formula corresponding to peaks (α,γ-F-Aα and α,γ-F-Aγ1/P-Aγ2) shown in the spectrum of FIG. 8.
FIG. 10 is a structural formula corresponding to a peak (γ-F-Bγ2) shown in the spectrum of FIG. 8.
FIG. 11 is an example of a multidimensional nuclear magnetic resonance spectrum of a lignocellulose-containing molded article.
FIG. 12 is a structural formula corresponding to a peak (6-F-C6) shown in the spectrum of FIG. 11.

### Description of Embodiments

Hereinafter, an example of a preferred embodiment will be specifically described. Note that each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or greater and Y or less". Unless otherwise noted, all test temperatures are room temperature (20°C ± 5°C). In the present specification, mass% means so-called weight percent, and does not mean mass concentration.

### Method for Producing Lignocellulose Solution

The method for producing a lignocellulose solution according to an embodiment of the present disclosure includes pulverization, mixing, and dissolution. The pulverization is a step of coarsely pulverizing a biomass containing lignocellulose as a raw material (hereinafter, sometimes referred to as a raw material biomass) to obtain a coarse powder. The mixing is a step of mixing the coarse powder with an organic acid. The dissolution is a step of dissolving the coarse powder in the organic acid.

The production method according to an embodiment of the present disclosure makes it possible to easily and safely obtain a lignocellulose solution having a high utility value without requiring a fine pulverization treatment which consumes a large amount of energy and without using a chemical which imposes a heavy load on the environment.

### Raw Material Biomass

The biomass containing lignocellulose is not particularly limited, and a woody biomass such as a broad-leaved tree or a coniferous tree or a herbaceous biomass such as rice straw or bran is appropriately selected and used. Here, the lignocellulose means a mixture of natural polymers consisting mainly of cellulose, hemicellulose, and lignin. Although the contents of cellulose, hemicellulose and, lignin vary depending on the type of biomass selected, the composition thereof is not particularly limited in the production method according to an embodiment of the present disclosure. Two or more types of biomasses containing lignocellulose which are different in composition can be used as raw materials.

### Pulverization

In the pulverization according to an embodiment of the present disclosure, the raw material biomass is coarsely pulverized to produce a coarse powder containing lignocellulose. In general, in pulverization, an apparatus for pulverizing a material to be pulverized having a size of several hundreds of millimeters or more into about several tens of millimeters is referred to as a "coarse pulverizer", and an apparatus for pulverizing a material having a size of the order of several tens of millimeters into about from several millimeters to several hundreds of micrometers is referred to as a "middle pulverizer". When a "pulverizer" is merely mentioned, it means the "middle pulverizer". In addition, an apparatus for fine pulverization to the order of several micrometers is referred to as a "fine pulverizer", and an apparatus for producing fine powder of several micrometers or less is referred to as an "ultrafine pulverizer".

In the present specification, a powder containing particles having a particle size of 0.35 mm or more is referred to as "coarse powder", and pulverization for producing the coarse powder is referred to as "coarse pulverization". Therefore, in the pulverization according to an embodiment of the present disclosure, "coarse pulverization" is performed using a "pulverizer". The coarse powder obtained in the pulverization according to an embodiment of the present disclosure is not subjected to a high degree of fine pulverization treatment using a "fine pulverizer " and an "ultrafine pulverizer". Therefore, cellulose, lignin, and the like in the raw material biomass are less structurally broken, and, for example, crystallinity of the cellulose, antibacterial property, ultraviolet absorption property, and other properties peculiar to lignin are maintained even after pulverization. In addition, since a high degree of fine pulverization treatment by a "fine pulverizer" or an "ultrafine pulverizer" is not required, generation of fine powder is suppressed.

In the production method according to an embodiment of the present disclosure, particles contained in the coarse powder may have a particle size of from 0.10 mm to 3.0 mm, from 0.15 mm to 2.0 mm, from 0.20 mm to 1.0 mm, from 0.25 mm to 0.75 mm, from 0.30 mm to 0.55 mm, or from 0.35 mm to 0.50 mm. From the viewpoint of improving safety, a coarse powder containing no particles having a particle size of less than 100 µm is preferable, and a coarse powder containing no particles having a particle size of 80 µm or less is more preferable. A more preferable coarse powder is a coarse powder having a particle size in a range of from 0.35 mm to 0.50 mm. The particle size of the coarse powder is measured by a sieve classification method using a JIS standard sieve.

As long as the above-described coarse powder is obtained, the method for coarsely pulverizing the raw material biomass is not particularly limited, and a known pulverization method such as compression pulverization, impact pulverization, or shear pulverization may be used. The pulverization may be dry pulverization or wet pulverization. As described above, a pulverization method by which a coarse powder can be produced is sufficient for the production method according to an embodiment of the present disclosure. Therefore, dry pulverization, which is capable of micron-level pulverization and low in cost, is suitably used. If necessary, in the mixing which will be described below, wet pulverization may be used in combination, or wet pulverization may be performed in a state where the coarse powder and the organic acid are mixed. When wet pulverization is used in combination in the mixing, the particle size of the coarsely pulverized product obtained in the pulverization may be larger than the above-described range. When wet pulverization is used in combination in the mixing, a concentration of the organic acid used may be adjusted, and a retention time (dissolution time) in the dissolution which will be described below may be adjusted.

From the viewpoint of energy and cost reduction in the pulverization, preferable examples of the pulverizer include a jaw crusher, a gyratory crusher, a crushing roll, a hammer mill, a roller mill, a cutter mill, a hammer crusher, a Wiley mill, and a stone mill type pulverizer. Two or more types of pulverizers may be used in combination. A Wiley mill and a stone mill type pulverizer, which perform pulverization by shearing and impact, are preferable. The raw material biomass may be coarsely pulverized in a continuous or batchwise manner. Before the pulverization according to an embodiment of the present disclosure, the raw material biomass may be made into small pieces (chips) using a known cutter, chipper, or the like.

For example, in the case of a woody biomass, it is collected from natural forest, cut into logs or the like, and then processed into chips by a process called debarking or chipping. The thus obtained wood chips having a size of about 3 cm square may be obtained as the raw material biomass according to an embodiment of the present disclosure and coarsely pulverized in the pulverization. In this pulverization, a pulverization ratio (B/A), which is a ratio of a particle size B (about several millimeters) of a crushed material to a size A (about several centimeters) of a material to be pulverized, can be selected in a range of from 1/20 to 1/2. The pulverization ratio (B/A) may be about 1/10, and may be about from 1/3 to 1/4. A larger pulverization ratio (B/A) is advantagous because more various chips can be selected as the raw material biomass. Also, Bond's law is known for pulverization. The Bond's law is a law that work required to pulverize a certain weight of a material to be pulverized is inversely proportional to a square root of a particle size of a pulverized material. According to this law, a smaller particle size of the pulverized material or a larger pulverization ratio (B/A) requires more work. Therefore, the particle size of the pulverized material is preferably as large as possible and the pulverization ratio (B/A) is preferably as small as possible in consideration of the dissolution which will be described later.

In addition, as described above, the pulverization method in an embodiment of the present disclosure may be impact, shear, and friction, and is not limited to compression pulverization requiring hardness. Depending on the pulverization method, the crystallinity of the pulverized material may vary. For example, JP 6137525 B describes a method for producing amorphized cellulose including applying a shear force to a cellulose-containing raw material under a temperature condition of from -5 to 25°C, removing heat and pulverizing the raw material, and amorphizing cellulose. Thus, depending on the pulverization method, the cellulose in the pulverized material may be amorphized. Therefore, it is preferable to select the pulverization method in consideration of the crystallinity of the intended pulverized material in relation to the dissolution time which will be described later.

### Mixing

In the mixing, the coarse powder containing lignocellulose and the organic acid are mixed. Preferably, the coarse powder and the organic acid are uniformly mixed.

### Organic Acid

The organic acid that can be used in this step is not particularly limited, and a typical organic acid is a carboxylic acid. The carboxylic acid may be an aliphatic carboxylic acid or an aromatic carboxylic acid. From the viewpoint of excellent solubility of the coarse powder, an α-keto acid and a carboxylic acid having a formyl group are preferable, and an organic acid selected from the group consisting of formic acid, glyoxylic acid, and pyruvic acid is particularly preferable.

An amount of the organic acid added is appropriately selected depending on the type of the raw material biomass, the grain size of the coarse powder, the type of the organic acid, and the like. From the viewpoint of improving a dissolution efficiency, the amount of the organic acid added is preferably 4 parts by weight or more and more preferably 9 parts by weight or more relative to 1 part by weight of the coarse powder. From the viewpoint that the molded article which will be described below is easily obtained, the amount of the organic acid added is preferably 200 parts by weight or less and more preferably 49 parts by weight or less relative to 1 part by weight of the coarse powder. The amount of the organic acid relative to 1 part by weight of the coarse powder may be from 4 to 200 parts by weight, from 4 to 49 parts by weight, from 9 to 200 parts by weight, or from 9 to 49 parts by weight.

A method for adding the organic acid to the coarse powder is not particularly limited, and the organic acid may be added to the coarse powder as it is, or may be added to the coarse powder as an organic acid solution (for example, an aqueous organic acid solution). In other words, the production method may further include preparing an organic acid solution by dissolving the organic acid in a solvent, and the mixing may be performed by adding the organic acid to the coarse powder. The solvent is not particularly limited as long as it is a good solvent for the organic acid, and water is preferably used from the viewpoint of safety and availability.

When the organic acid is added, as an organic acid solution, to the coarse powder, a concentration of the organic acid is also not particularly limited, and is appropriately selected depending on the type of the raw material biomass, the grain size of the coarse powder, the type of the organic acid, dissolution conditions, and the like. For example, an organic acid solution having a high concentration can uniformly dissolve the coarse powder in a short time. From the viewpoint of improving the dissolution efficiency, the concentration of the organic acid may be 80 mass% or more, and the upper limit thereof may be 100 mass%. On the other hand, a lower concentration of the organic acid solution tends to result in a higher mechanical strength of the obtained molded article. This is presumed to be because an esterification reaction between the organic acid and the lignocellulose occurs in the dissolution which will be described below, but an organic acid solution having a low concentration results in a low degree of esterification, and thus fine crystals of cellulose in the lignocellulose remain and contribute to the improvement in strength of the molded article. In addition, when the organic acid concentration is less than 75 mass%, vapor pressure of the organic acid decreases and does not exceed an explosion limit, and thus the safety of an operation can be ensured. Further, a low organic acid concentration provides an advantage that, since a degree of corrosion resistance required of equipment can be lowered, the equipment cost can be reduced. Further, in the case where the organic acid is formic acid, it is azeotropic with water, and thus a high energy cost for recovery, regeneration, or purification of formic acid is required for producing a high-concentration aqueous formic acid solution. From the viewpoint of energy cost reduction, a low-concentration aqueous formic acid solution is preferable.

### Dissolution

In the dissolution, a solution containing lignocellulose is produced by dissolving the coarse powder containing lignocellulose in the organic acid. In the dissolution, the coarse powder may be partially dissolved in the organic acid. In the case of partial dissolution, the lignocellulose solution according to an embodiment of the present disclosure is produced by removing insoluble components by filtration or the like. In the present specification, "dissolved" means a state in which the shape of the coarse powder in the organic acid cannot be visually recognized. Even when fibrous materials derived from lignocellulose are observed in the solution by microscopic observation or the like, the case where the shape of the coarse powder itself has disappeared is defined as "dissolved". A liquid in such a "dissolved" state is defined as a "solution" in the present disclosure.

As long as the lignocellulose solution according to an embodiment of the present disclosure is obtained, the dissolution conditions in the dissolution are not particularly limited, and are appropriately selected depending on the type of the raw material biomass, the grain size of the coarse powder, the type of the organic acid, and the like. From the viewpoint of high dissolution efficiency, a dissolution temperature is preferably 20°C or higher, and more preferably 30°C or higher. From the viewpoint of energy reduction, a preferable dissolution temperature is 100°C or lower. It is possible to appropriately adjust the dissolution time (retention time) while confirming the dissolution state of the coarse powder.

From the viewpoint of promoting the dissolution, a stirring treatment may be performed, or a stirring treatment accompanied by pulverization may be performed, in the dissolution. A stirring treatment accompanied by pulverization in the organic acid makes it possible to dissolve a biomass under milder conditions. In other words, the production method according to an embodiment of the present disclosure includes stirring the coarse powder while pulverizing the coarse powder in the organic acid in the dissolution. In the dissolution, a stirring treatment accompanied by pulverization may be continued until the lignocellulose solution is obtained, or a stirring treatment accompanied by pulverization may be performed for a predetermined time, and then shifted to a stirring treatment not accompanied by pulverization. Examples of an apparatus for the stirring treatment accompanied by pulverization include a bead mill, a colloid mill, a disk refiner, and a conical refiner. In this stirring treatment, pulverization may be performed using a jet mill, a high-pressure homogenizer, a stone mill type pulverizer, or the like. Such pulverization is referred to as wet pulverization. When wet pulverization is performed, coarse pulverization of the raw material biomass in the pulverization described above can be further simplified.

### Metal Salt

Preferably, in the dissolution, a metal salt represented by a general formula M^{a}M^{b}(SO₄)₂, where M^{a} is a trivalent metal, and M^{b} is NH₄ or a monovalent metal is used in combination with the organic acid. The metal salt represented by this general formula is a double salt also referred to as "alum". It may be a hydrate of a metal salt. The combined use of the organic acid and alum improves the solubility of the coarse powder in the organic acid.

Specific examples of the trivalent metal include aluminum, iron, and chromium. Specific examples of the monovalent metal include sodium and potassium. A preferable metal salt is aluminum potassium sulfate. Aluminum potassium sulfate dodecahydrate may be used as the metal salt.

From the viewpoint of remarkable effect of combined use of the metal salt with the organic acid, an amount of the metal salt added is preferably 1 part by weight or more, more preferably 2 parts by weight or more, and even more preferably 5 parts by weight or more, relative to 100 parts by weight of the coarse powder. From the viewpoint that a solution or molded article having a high lignocellulose content is obtained, the amount of the metal salt added is preferably 30 parts by weight or less, more preferably 25 parts by weight or less, and even more preferably 20 parts by weight or less.

### Pressure Adjustment

The production method according to an embodiment of the present disclosure may further include pressure adjustment of increasing or reducing pressure using a pressure adjustment means before mixing the coarse powder and the organic acid and/or after mixing the coarse powder and the organic acid. It is presumed that, in this pressure adjustment, a variation in pressure applied to the raw material biomass (coarse powder) relaxes the strong higher-order structure of lignocellulose and remarkably improves the solubility in the organic acid. This pressure adjustment enables dissolution at a relatively low temperature, and reduces energy required for heating and/or temperature keeping in the dissolution. From the viewpoint that the organic acid is efficiently introduced into the structure of the coarse powder by the pressure variation, it is preferable to increase or reduce pressure after adding the organic acid to the coarse powder. Depending on the methods and conditions in the pulverization and the dissolution, the pressure adjustment configuration can be omitted.

When the pressure is reduced in the pressure adjustment, the pressure is preferably reduced in a range of from 1.0 kPa to 10.0 kPa (absolute pressure). In addition, when the pressure is increased in the pressure adjustment, the pressure is preferably increased in a range of from 200 kPa to 1000 kPa (gauge pressure). In the present specification, the absolute pressure is used when the pressure is lower than the atmospheric pressure by a pressure reduction treatment, and the gauge pressure based on the atmospheric pressure is used when the pressure is higher than the atmospheric pressure by a pressure increase treatment.

The pressure adjusting means used in the pressure adjustment is not particularly limited. The pressure is adjusted to the above-described range by a known means such as an aspirator, an ejector, a compressor, or a mechanical pump.

### Lignocellulose Solution

The lignocellulose solution obtained by the production method according to an embodiment of the present disclosure contains a solubilized lignocellulose. A concentration of the lignocellulose solution is preferably 0.5 mass% or more, and more preferably 2.0 mass% or more. From the viewpoint of ease of production, the concentration of the lignocellulose solution is preferably 20 mass% or less, and more preferably 10 mass% or less. The concentration of the lignocellulose solution may be from 0.5 to 20 mass%, from 0.5 to 10 mass%, from 2.0 to 20 mass%, or from 2.0 to 10 mass%.

The lignocellulose solution may contain a metal salt represented by a general formula M^{a}M^{b}(SO₄)₂, where M^{a} is a trivalent metal, and M^{b} is NH₄ or a monovalent metal. Examples of the metal salt include metal salts described above for the method for producing a lignocellulose solution. A preferable metal salt is aluminum potassium sulfate. A content of the metal salt in the lignocellulose solution is preferably 1 part by weight or more, more preferably 2 parts by weight or more, and even more preferably 5 parts by weight or more, relative to 100 parts by weight of the coarse powder. The content of the metal salt is preferably 30 parts by weight or less, more preferably 25 parts by weight or less, and even more preferably 20 parts by weight or less. The lignocellulose solution may further contain a known additive such as a dye as long as the effects of the present disclosure are not inhibited.

### Molded article

The molded article according to an embodiment of the present disclosure is formed from the lignocellulose solution described above. A main component of the molded article is lignocellulose. In the present specification, the "main component" means a component whose content is at least 50 mass% or more. A content of the lignocellulose in the lignocellulose-containing molded article is at least 50 mass% or more, preferably 60 mass% or more, more preferably 80 mass% or more, even more preferably 90 mass% or more, and the upper limit value is 100 mass%.

Specifically, the molded article according to an embodiment of the present disclosure can be obtained by adding a predetermined shape in a process of removing a liquid component containing an unreacted organic acid from the lignocellulose solution. In other words, the molded article can be obtained using lignocellulose derived from a biomass and an organic acid as materials. Therefore, this molded article is essentially different from a particle board or the like produced by solidifying wood flour into a predetermined shape using a known adhesive. That is, the molded article according to an embodiment of the present disclosure is substantially free of an adhesive component. Here, the term "substantially free of" means that no adhesive is intentionally added in the production process for the molded article, and means that no adhesive is detected in the molded article by a commonly used analysis method. The term "adhesive component" as used herein means a constituent component of a known synthetic adhesive, and does not mean an adhesive component such as lignin originally contained in the raw material biomass.

The molded article may have a functional group derived from the organic acid as long as the effects of the present disclosure are not inhibited. The sentence that "the molded article has a functional group derived from the organic acid" does not mean that the molded article contains an unreacted organic acid, but means that the organic acid is ester-bonded to constituent components of the molded article. That is, the lignocellulose is composed of cellulose, hemicellulose, and lignin. By forming ester bonds between at least parts of cellulose, hemicellulose, and lignin and the organic acid, the molded article according to an embodiment of the present disclosure having a functional group derived from the organic acid can be obtained. The molded article according to an embodiment of the present disclosure is substantially free of an unreacted organic acid at the time of completion of molding. Depending on a storage state and a storage period of the molded article according to an embodiment of the present disclosure, some of the ester bonds of the organic acid bound to cellulose, hemicellulose, and lignin of the molded article may be hydrolyzed to generate the organic acid. Therefore, it is not excluded that the molded article according to an embodiment of the present disclosure contains an organic acid generated by hydrolysis.

Preferably, a functional group represented by the following formula (1) is bound to at least some of hydroxyl groups of cellulose, hemicellulose, and lignin constituting the lignocellulose. 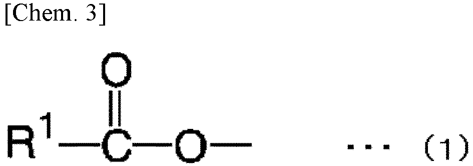 where R¹ is a hydrogen atom or a functional group represented by the following formula (2) 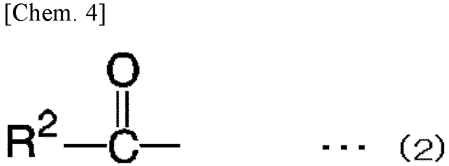 where R² represents a hydrogen atom or a methyl group.

The functional group represented by formula (1) is formed by an esterification reaction between the hydroxyl group in the lignocellulose and the organic acid in the dissolution described above. When the functional group is introduced into at least parts of lignin, cellulose, and hemicellulose constituting the lignocellulose in this manner, cellulose crystals become small or the crystallinity decreases to some extent. It is considered that this promotes the dissolution of the lignocellulose in the organic acid. The functional group represented by formula (1) may be bound to all of the hydroxyl groups of cellulose, hemicellulose, and lignin constituting the lignocellulose. Examples of the organic acid include organic acids described above for the method for producing a lignocellulose solution. Preferable organic acids are formic acid, glyoxylic acid, and pyruvic acid. That is, the functional group represented by formula (1) may be formed by an esterification reaction between at least some of hydroxyl groups of lignin, cellulose, and hemicellulose constituting the lignocellulose and an organic acid selected from formic acid, glyoxylic acid, and pyruvic acid.

A more preferable organic acid is formic acid. A formyl group is formed by an esterification reaction between at least some of hydroxyl groups in constituent components of lignocellulose and formic acid. In a preferred embodiment, the molded article contains, as a main component, lignocellulose with a formyl group bound as the functional group represented by formula (1).

The functional group bound to lignocellulose can be confirmed by multidimensional nuclear magnetic resonance measurement (3D-NMR measurement). For example, when the functional groups bound to lignocellulose are formyl groups, ¹H-¹³CHSQC, edited-HSQC, HMBC, and 3D TOCSY-HSQC NMR can confirm formyl groups bound to 6-position of a glucose residue of cellulose, 3-position of a xylose residue of xylan as a main skeleton of hemicellulose, and α-and γ-positions of β-0-4 and β-5 which can be presumed to be lignin binding sites.

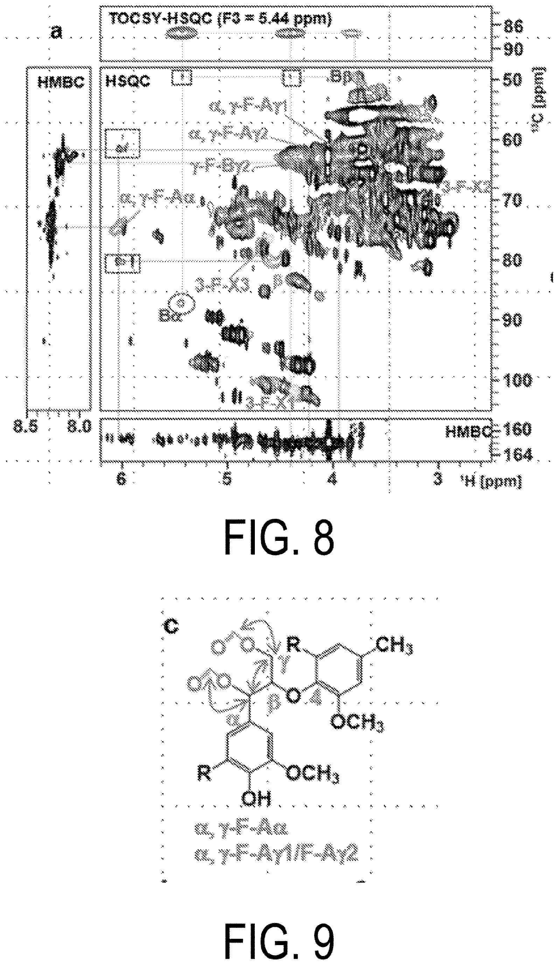

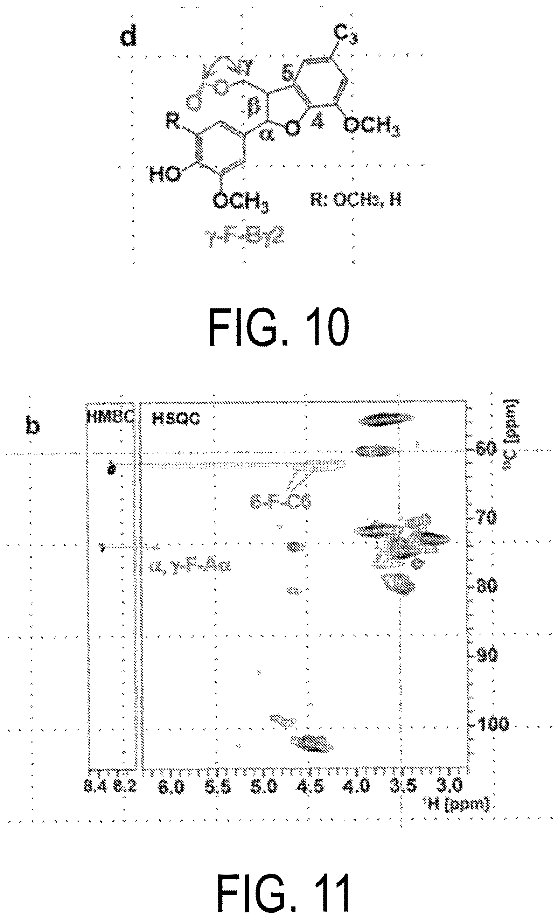

Hereinafter, a specific method for identifying a functional group bound to lignocellulose will be described using a formyl group as an example. FIG. 8 is a spectrum obtained by multidimensional nuclear magnetic resonance measurement of a molded article according to an embodiment of the present disclosure, the spectrum showing that lignin is formylated. A structural formula to which peaks indicated by subscripts (α,γ-F-Aα and α,γ-F-Aγ1/P-Aγ2) correspond is shown in FIG. 9. A structural formula to which a peak indicated by a subscript (γ-F-Bγ2) corresponds is shown in FIG. 10. That is, the detection of these peaks in the spectrum of FIG. 8 can confirm that at least parts/part of α-position and/or γ-position of β-0-4 and β-5, which are binding sites of lignin, are/is formylated.

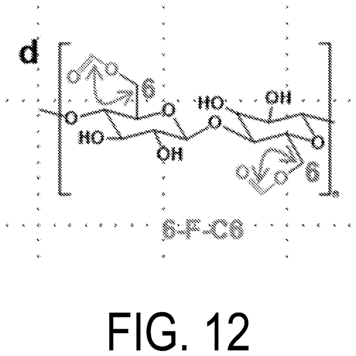

FIG. 11 is a spectrum obtained by multidimensional nuclear magnetic resonance measurement of a molded article according to an embodiment of the present disclosure, the spectrum showing that cellulose is formylated. A structural formula to which the peak indicated by a subscript (γ-F-Bγ2) corresponds is shown in FIG. 12. That is, the detection of this peak in the spectrum of FIG. 11 can confirm that at least a part of 6-position of the glucose residue of cellulose is formylated.

These can be analyzed from the standard spectra described above.

By performing NMR, particularly multidimensional nuclear magnetic resonance measurement (3D-NMR measurement) as described above, a structure of a counterpart to which the functional group is bound can be specified. Accordingly, this can confirm that the functional group according to an embodiment of the present disclosure is bound to at least parts of lignin, cellulose, and hemicellulose constituting lignocellulose.

Similarly, the standard spectra of the molded article according to an embodiment of the present disclosure are analyzed by performing multidimensional nuclear magnetic resonance measurement (3D-NMR measurement), and thus the structure of the counterpart to which the functional group such as a formyl group is bound can be specified. Accordingly, this can confirm that, in the molded article according to an embodiment of the present disclosure, for example, the functional group represented by formula (1) is bound to at least parts of lignin, cellulose, and hemicellulose constituting lignocellulose.

### Binding Amount of Functional Group

In the molded article according to an embodiment of the present disclosure, an amount of functional groups bound to lignin, cellulose, and hemicellulose constituting lignocellulose is not particularly limited and is appropriately adjusted as long as the effects of the present disclosure are obtained. For example, in the case of specifying the binding amount of functional groups using multidimensional nuclear magnetic resonance measurement (3D-NMR measurement), it is necessary to assign all functional groups bound to various structures. This operation is very complicated and is not practical as a method for determining the binding amount of functional groups. Therefore, in an embodiment of the present disclosure, a method of quantifying the binding amount of the functional group based on a peak intensity in an infrared absorption spectrum is adopted. Specifically, the functional groups bound to lignin, cellulose, and hemicellulose are detected by an infrared absorption spectrum obtained by absorption spectrometry of the molded article formed into a thin film. For example, in the case of the functional group represented by formula (1), the amount of the functional groups bound to cellulose, hemicellulose, and lignin is defined as a ratio of a peak of 1025 cm⁻¹ assigned to a C-O-C bond of cellulose to a peak of 1725 cm⁻¹ assigned to a C=O bond of the functional group represented by formula (1) in an absorption spectrum obtained by a Fourier transform infrared spectrophotometer (FT-IR). That is, in an absorption spectrum in which the vertical axis is outputted as absorbance (ABS.), the binding amount of the functional group represented by formula (1) is obtained as a ratio H1/H2 of a peak height H1 assigned to the C=O bond of the functional group represented by formula (1) to a peak height H2 assigned to the C-O-C bond of cellulose. The binding amount of the functional group is preferably 0.10 or more, more preferably 0.15 or more, even more preferably 0.25 or more, and particularly preferably 0.35 or more, and is preferably 2.00 or less, more preferably 1.80 or less, even more preferably 1.50 or less, still more preferably 1.25 or less, and particularly preferably 0.60 or less. The binding amount of the functional group may be from 0.10 to 2.00, from 0.10 to 1.80, from 0.10 to 1.50, from 0.10 to 1.25, from 0.10 to 0.60, from 0.15 to 2.00, from 0.15 to 1.80, from 0.15 to 1.50, from 0.15 to 1.25, from 0.15 to 0.60, from 0.25 to 2.00, from 0.25 to 1.80, from 0.25 to 1.50, from 0.25 to 1.25, from 0.25 to 0.60, from 0.35 to 2.00, from 0.35 to 1.80, from 0.35 to 1.50, from 0.35 to 1.25, or from 0.35 to 0.60. In a preferred embodiment, the binding amount of the functional group as determined by an infrared absorption spectrum is 0.35 or more and 0.60 or less.

When the binding amount of the functional group as determined by the infrared absorption spectrum is less than 0.10, the binding amount of the functional groups to the hydroxyl groups of cellulose, hemicellulose, and lignin is not sufficient, and thus the amount of an insoluble matter remaining as a residue at the time of dissolution in the organic acid or the organic acid solution increases. Further, when the molded article is a film, the insoluble matter remains as a foreign matter, resulting in abnormal uniformity of film thickness. In addition, high temperatures are required during thermal molding due to a high glass transition temperature of the molded article. For this reason, thermal decomposition may occur during molding, which is not preferable.

On the other hand, when the binding amount of the functional group as determined by the infrared absorption spectrum is more than 2.00, it is necessary to use an organic acid solution having a low water content, to perform a dissolution treatment for a long period of time, to perform heating dissolution at a high temperature for exhibiting a dehydration effect, and the like, in a process of binding the functional groups to the hydroxyl groups of cellulose, hemicellulose, and lignin. For this reason, molecular weights of polysaccharides, or cellulose, hemicellulose, and lignin constituting the raw material biomass decrease, leading to reductions in physical properties of the resulting molded article, particularly strength such as bendability, maximum elongation, and Young's modulus, which is not preferable.

In a preferred embodiment, the functional group represented by formula (1) is a formyl group. In a particularly preferred embodiment, the binding amount of the formyl group (hereinafter referred to as "degree of formylation") as determined by the infrared absorption spectrum is 0.35 or more and 0.60 or less. In this embodiment, even when the density is 1.20 g/cm³ or more, good bendability can be exhibited, as will be described later. The molded article of this embodiment can be applied to applications in which both strength and elongation are required and thermal durability is required. For example, a molded article having a degree of formylation of from 0.35 to 0.60 and a density of 1.20 g/cm³ or more is suitable for applications requiring high density, high strength, and a high glass-transition point, such as a housing of a personal computer and a dashboard of an automobile.

When the molded article according to an embodiment of the present disclosure is measured with a Fourier transform infrared spectrophotometer (FT-IR), all organic acids not bound to cellulose, hemicellulose, and lignin are removed from a measurement sample by performing a pretreatment. Therefore, even if a hydrolyzed organic acid is present in the molded article according to an embodiment of the present disclosure due to storage conditions or the like, the functional group derived from the free organic acid is excluded from the binding amount of the functional group in the embodiment of the present disclosure. When it is difficult to obtain a thin film of the molded article as a sample for FT-IR measurement, a sample having a predetermined thickness may be measured by an ATR method (attenuated total reflection method).

The binding amount of the functional group can be adjusted by the concentration of the organic acid solution and dissolution temperature used in the dissolution of the coarse powder containing lignocellulose. For example, a molded article having a large binding amount of the functional group can be obtained by increasing the concentration of the organic acid solution and increasing the dissolution temperature. In addition, for the esterification reaction with the organic acid, a reaction system proceeds in a direction of esterification by increasing the temperature of the reaction system or increasing a reaction time, and thus the binding amount of the functional group increases.

The lignocellulose contained in the lignocellulose-containing molded article according to an embodiment of the present disclosure is produced by solubilizing the lignocellulose in the raw material biomass without undergoing a fine pulverization treatment. The molded article may contain a fibrous material derived from lignocellulose. The fibrous material may have a cellulose type I crystal structure. The fibrous material derived from lignocellulose is considered to be cellulose fibers which are not broken in the pulverization. The presence of the fibrous material can be confirmed by scanning electron microscopic observation.

The density of the lignocellulose-containing molded article according to an embodiment of the present disclosure is less than 1.20 g/cm³, and is preferably 1.15 g/cm³ or less, and more preferably 1.10 g/cm³ or less. A molded article having a density of less than 1.20 g/cm³ has good bendability. From the viewpoint of excellent mechanical strength, the density of the molded article is preferably 0.20 g/cm³ or more, and more preferably 0.30 g/cm³ or more.

In an embodiment, the density of the lignocellulose-containing molded article according to an embodiment of the present disclosure may be less than 1.6 g/cm³. Preferably, when the binding amount of the functional group (particularly, the degree of formylation) is from 0.35 to 0.60, the density of the molded article may be 1.2 g/cm³ or more and less than 1.6 g/cm³. The molded article has high stress and is excellent in bendability. The binding amount of the functional group can be increased by reducing the particle size of the coarse powder and dissolving the coarse powder. When the binding amount of the functional group is increased by reducing the particle size of the coarse powder, the density may be excessively reduced and desired bendability may not be obtained. The density of the molded article according to an embodiment of the present disclosure is an apparent density as measured in accordance with JIS Z 8807 "Methods of measuring density and specific gravity of solid".

The lignocellulose-containing molded article according to an embodiment of the present disclosure has mechanical properties such that the molded article can be deformed without cracking or the like. Tensile property of the lignocellulose-containing molded article is appropriately set depending on the application and shape thereof, but, from the viewpoint of easy deformation, a Young's modulus of the molded article is preferably 0.05 GPa or more, and more preferably 1.0 GPa or more. In light of durability, the Young's modulus is preferably 4.0 GPa or less. In light of durability, a maximum stress of the molded article is preferably 0.5 MPa or more, more preferably 5.0 MPa or more, even more preferably 10 MPa or more, and particularly preferably 20 MPa or more. From the viewpoint of easy deformation, the maximum stress is preferably 80 MPa or less. From the viewpoint of easy deformation, a maximum elongation of the molded article is preferably 0.5% or more, and more preferably 1.5% or more. In light of durability, the maximum elongation is preferably 5.0% or less. The Young's modulus, maximum stress, and maximum elongation of the lignocellulose-containing molded article are measured by a tensile test in accordance with the provisions of ISO527-1. Details of measurement methods and measurement conditions will be described in the Examples below.

For example, a lignocellulose solution containing a small amount of a crystalline component having a cellulose type I structure can be obtained by pulverizing the raw material biomass more finely and reducing the particle size of the coarse powder or using a high-concentration organic acid in the dissolution. A molded article obtained from the lignocellulose solution has a large maximum elongation and high surface smoothness. On the other hand, a lignocellulose solution containing a large amount of a crystalline component having a cellulose type I structure can be obtained by decreasing the pulverization ratio of the raw material biomass and increasing the particle size of the coarse powder, decreasing the concentration of the organic acid used in the dissolution, or shortening the dissolution time. A molded article obtained from the lignocellulol solution has a high maximum stress (strength). As described above, according to the production method according to an embodiment of the present disclosure, a desired molded article can be obtained by selecting a method and conditions in each step in consideration of characteristics required of the molded article, energy efficiency in the pulverization, productivity, dissolution efficiency in the dissolution, recovery energy of the organic acid, and the like.

From the viewpoint of obtaining high heat resistance, a glass transition temperature Tg of the lignocellulose-containing molded article according to an embodiment of the present disclosure is preferably 100°C or higher, more preferably 200°C or higher, even more preferably 210°C or higher, and particularly preferably 220°C or higher. The upper limit value is not particularly limited, but the glass transition temperature Tg is preferably 280°C or lower. The glass transition temperature of the molded article according to an embodiment of the present disclosure is measured by dynamic viscoelasticity measurement. Details of a measurement method and measurement conditions will be described in the Examples below.

The lignocellulose-containing molded article according to an embodiment of the present disclosure may contain a metal salt represented by a general formula M^{a}M^{b}(SO₄)₂, where M^{a} is a trivalent metal, and M^{b} is NH₄ or a monovalent metal. Examples of the metal salt include metal salts described above for the method for producing a lignocellulose solution. When the lignocellulose-containing molded article contains the metal salt described above, a content of the metal salt in the molded article is preferably 1 part by weight or more, and more preferably 5 parts by weight or more, relative to 100 parts by weight of the molded article. The content of the metal salt is preferably 20 parts by weight or less. The lignocellulose-containing molded article may further contain a known additive such as a dye as long as the effects of the present disclosure are not inhibited.

The molded article according to an embodiment of the present disclosure has excellent solubility in an organic acid. Specifically, the molded article has an amount of an insoluble matter in the organic acid of 5.0 mass% or less. In the present specification, the amount of the insoluble matter in the organic acid is determined by a dissolution test in which a coarse powder obtained by coarsely pulverizing a molded article is mixed with 50 parts by weight of an organic acid relative to 1 part by weight of the coarse powder and dissolved, then the obtained dissolution liquid is passed through a 20-mesh sieve, and the weight of a residue remaining on the sieve is measured. A proportion (mass%) of the residue to the coarse powder mixed with the organic acid is calculated as the amount of the insoluble matter. In this dissolution test, before and/or after the organic acid and the coarse powder are mixed, pressure adjustment of reducing or increasing pressure may be performed.

The lignocellulose-containing molded article according to an embodiment of the present disclosure contains cellulose, hemicellulose, and lignin, at least parts of which are ester-bonded with the organic acid. The cellulose, the hemicellulose, and the lignin each have a unique number average molecular weight. Therefore, in a chromatogram obtained by dissolving the molded article according to an embodiment of the present disclosure in dimethyl sulfoxide (DMSO) and performing gel permeation chromatography (GPC) measurement, a plurality of peaks may be detected. Typically, a first peak and a second peak are detected in a descending order of molecular weight. The number average molecular weight of the first peak may be from 50000 to 10000000, from 100000 to 5000000, or from 200000 to 2000000. The number average molecular weight of the second peak may be from 500 to 100000, from 800 to 50000, or from 1000 to 10000. When the molecular weights of the cellulose, the hemicellulose, and the lignin are close to each other, a plurality of peaks may overlap each other and be detected as a single peak. Details of a method and conditions for measuring the molecular weights by GPC will be described in the Examples below.

The lignocellulose-containing molded article according to an embodiment of the present disclosure contains cellulose, hemicellulose, and lignin, at least parts of which are ester-bonded with the organic acid, as described above. Therefore, the molded article according to an embodiment of the present disclosure may contain an insoluble matter which is not dissolved in DMSO. When the molded article according to an embodiment of the present disclosure contains an insoluble matter which is not dissolved in DMSO, the amount of the DMSO-insoluble matter in the molded article is not particularly limited, and may be, for example, more than 0 mass% and 80 mass% or less, or from 5.0 to 80 mass%. The method and conditions for measuring the amount of DMSO-insoluble matter will be described in the Examples below. In addition, the presence of a component insoluble in DMSO does not mean a component insoluble in the above-described organic acid. It merely means the presence of a component whose molecular weight cannot be measured by GPC because it is dissolved in an organic acid such as formic acid but is not dissolved in DMSO.

The shape or the like of the lignocellulose-containing molded article according to the present disclosure is not particularly limited, and representative molded articles include sheets and films. The sheet and film containing lignocellulose are obtained, for example, by a production method including casting a lignocellulose solution on a substrate and drying the lignocellulose solution on the substrate. A thickness of the film or sheet can be selected according to the application thereof. For example, the film may have a thickness of from 10 to 300 µm, preferably from 10 to 150 µm, and more preferably from 10 to 100 µm. The sheet may have a thickness of from 300 to 600 µm.

Known sheets and films formed from lignocellulose obtained by finely pulverizing a raw material biomass are brittle when dried and are cracked by bending. On the other hand, the sheet and film formed from the lignocellulose solution according to the present disclosure contain a fibrous material derived from lignocellulose because the raw material biomass is not subjected to a fine pulverization treatment. The sheet and film contain the fibrous material, and thus the bendability thereof is improved. The sheet and film formed from the lignocellulose solution according to an embodiment of the present disclosure do not crack when bent at an angle of 90 degrees or more.

In addition, the lignocellulose-containing molded article according to an embodiment of the present disclosure is, in other words, a molded article having physical properties resulting from a raw material biomass and containing the raw material biomass as a main component. The molded article can have physical properties of cellulose, hemicellulose, and lignin. The molded article can be applied to fields such as medical care, clothes, housing equipment and the like as films, fibers, wallpaper and the like required to have functions such as antibacterial property, ultraviolet absorption property, metal adsorption ability and the like. In particular, molded articles in a film or sheet form are useful.

### Examples

The effects of the present disclosure will be clarified by the examples below, but the present disclosure should not be construed as being limited based on the description of the examples.

### Dissolution Test

### Example 1

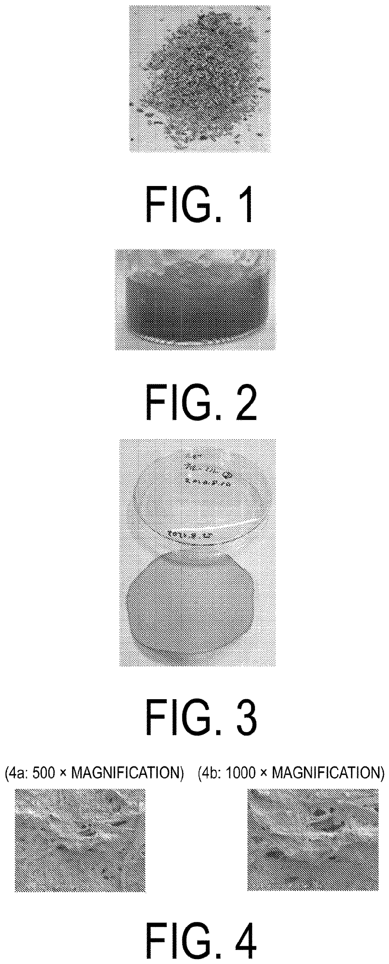

Eucalyptus chips were pulverized using a Wiley mill equipped with a 20-mesh sieve, and the resulting wood flour was classified using a JIS standard sieve. Particles that passed through a sieve having an opening of 500 µm and did not pass through a sieve having an opening of 355 µm were collected, and eucalyptus wood flour (particle size: from 355 µ to 500 µm) was obtained. The resulting coarse powder is shown in FIG. 1.

Next, 200 mg of the eucalyptus wood flour was charged into a flask having a capacity of 30 ml, and 10 ml of a formic acid solution having a concentration of 80 mass% (available from Nacalai Tesque, Inc.) was added thereto under a nitrogen atmosphere. Subsequently, a water aspirator was connected to the flask, and the pressure was adjusted to 5 kPa (absolute pressure) by reducing the pressure for 30 minutes. Then, nitrogen gas was added for 2 minutes, and the temperature was raised to 50°C while stirring. After an elapse of 7 days at 50°C, it was confirmed, by visual observation, that the eucalyptus wood flour disappeared and that a lignocellulose solution of Example 1 was obtained. The lignocellulose solution of Example 1 is shown in FIG. 2.

### Examples 2 to 32

Lignocellulose solutions of Examples 2 to 32 were obtained in the same manner as in Example 1 except that the type of the raw material biomass, the dissolution conditions, and the like were changed to those listed in Tables 1 to 8 below. In Examples 22 and 24, aluminum potassium sulfate dodecahydrate (available from FUJIFILM Wako Pure Chemical Industries, Ltd.) was used as the metal salt. In Examples 25 to 28 and 30 to 32, a formic acid solution whose concentration was adjusted to a concentration as listed in Tables 7 and 8 below by diluting formic acid having a purity of 98 mass% or more (available from Nacalai Tesque, Inc.) with distilled water was used. In Example 29 shown to have a formic acid concentration of 100% in Table 7 below, formic acid having a purity of 98 mass% or more (available from Nacalai Tesque, Inc.) was used as is without dilution. No residual wood flour was visually recognized in any of the solutions.

### Comparative Example 1

Eucalyptus chips were placed in a ball mill and pulverized for 48 hours, and a fine powder was obtained. It was confirmed that the entire amount of the fine powder passed through a JIS standard sieve having an opening of 75 µm. Into a flask having a capacity of 30 ml, 200 mg of the obtained fine powder was charged, and 10 ml of formic acid having a concentration of 80 mass% (available from Nacalai Tesque, Inc.) was added thereto under a nitrogen atmosphere. After stirring at room temperature for 1 day, disappearance of the fine powder was visually confirmed.

### Comparative Example 2

A dissolution test was conducted in the same manner as in Comparative Example 1 except that cedar wood flour was used as the raw material biomass. After stirring at room temperature for 1 day, disappearance of the fine powder was visually confirmed.

### Film Formation Test

Each of the lignocellulose solutions of Examples 1 to 29 and Comparative Examples 1 and 2 was cast onto cellophane, allowed to stand overnight in a covered culture dish at room temperature, and then subjected to pressure reduction for 3 hours, thereby obtaining a lignocellulose-containing sheet. Each of the lignocellulose solutions of Examples 30 to 32 was cast onto cellophane, allowed to stand overnight in an uncovered culture dish at room temperature, and then subjected to pressure reduction for 3 hours, thereby obtaining a lignocellulose-containing sheet. The appearance of the lignocellulose-containing sheet of Example 1 is shown in FIG. 3. The physical properties of each sheet were evaluated by the following methods.

### Density

The apparent density (g/cm³) of each of the lignocellulose-containing sheets of Examples 1 to 32 and Comparative Examples 1 and 2 was measured in accordance with JIS Z 8807 "Methods of measuring density and specific gravity of solid". An average of five measurement values of the apparent density of each of the sheets is listed in Tables 1 to 8 below.

### Evaluation of tensile property

The lignocellulose-containing sheets of Examples 1 to 26 and 30 to 32 and Comparative Examples 1 and 2 were punched out to prepare dumbbell-shaped test pieces. Comparative Examples 1 and 2 were not subjected to the following tensile test because they were broken at the time of punching and could not produce test pieces.

Using a tensile tester (trade name "Universal Tensile Tester (Tensilon) RTG-1310" available from A&D Company, Limited), a tensile test (tensile speed: 10 mm/min, distance between grips: 50 mm) was performed in accordance with the provisions of ISO527-1, and the Young's modulus (unit: Gpa), maximum stress (unit: Mpa) and maximum elongation (unit: %) of each of Examples 1 to 24 were measured. An average of five measurement values of each of the properties is listed in Tables 1 to 6 and 8 below. The Young's moduli of Examples 30 to 32 were not measured.

### Glass Transition Temperature

The glass transition temperatures of the lignocellulose-containing sheets of Examples 1 to 24 and Comparative Examples 1 and 2 were measured using a dynamic viscoelasticity measuring apparatus (trade name "RSAG2" available from TA instruments). The measurement was performed in a nitrogen gas atmosphere at a temperature range of from -90 to 200°C, a rate of temperature increase of 3°C/min, an applied strain of 0. 1%, and a frequency of 1 Hz. The temperatures at which a storage elastic modulus, a loss elastic modulus, and a loss tangent tanδ show maximum values are listed in Tables 1 to 6 below as Tg(1), Tg(2), and Tg(3), respectively.

### Bendability

The lignocellulose-containing sheets of Examples 1 to 16 and 30 to 32 and Comparative Examples 1 and 2 were bent at an angle of 90° or more and their states were evaluated. The evaluation results are listed in Tables 1 to 4 and 8 below. In the table, the bendability "G" indicates that the sheet did not crack even when bent at 90° or more, and the bendability "B" indicates that the sheet cracked, whitened, or the like when bent up to 90°.

### Scanning Electron Microscopic Observation

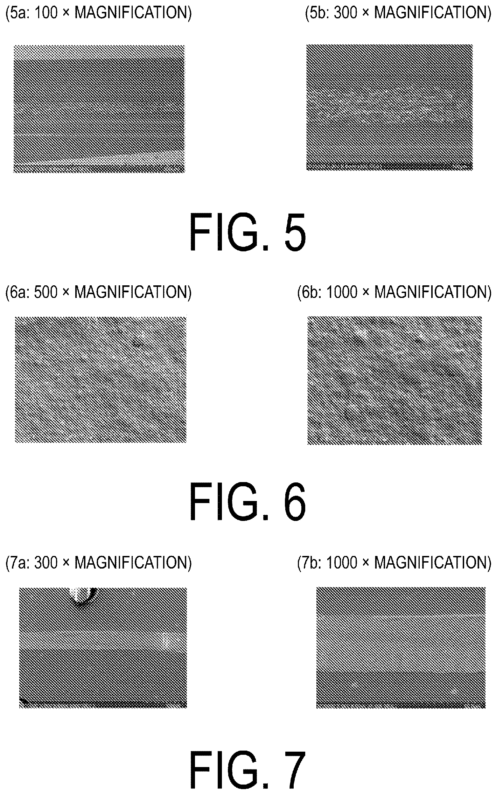

Surface states and cross-sectional states of the lignocellulose-containing sheets of Example 1 and Comparative Example 1 were observed using a scanning electron microscope. The cross-sectional state was observed by embedding a test piece collected from each sheet in a resin and cutting out its cross section using a microtome. FIG. 4 shows the surface states (magnification: 500 times (4a), 1000 times (4b)) of Example 1. FIG. 5 shows the cross-sectional states (magnification: 100 times (5a), 300 times (5b)) of Example 1. FIG. 6 shows the surface states (magnification: 500 times (6a), 1000 times (6b)) of Comparative Example 1. FIG. 7 shows the cross-sectional states (magnification: 300 times (7a), 1000 times (7b)) of Comparative Example 1.

### Molecular Weight Evaluation

5 mg was collected from each of the lignocellulose-containing sheets of Examples 25 to 29, precisely weighed, and then put into a vial bottle having a capacity of 5 mL. To the vial bottle, 5 g of dimethylsulfoxide (DMSO, available from FUJIFILM Wako Pure Chemical Industries, Ltd.) was added. The mixture was stirred at an ordinary temperature for 4 days and then subjected to filtration under reduced pressure, and each of the filtrate and the filtration residue was collected.

The obtained filtration residue was washed with distilled water, allowed to stand in a desiccator, and dried under reduced pressure for one week. Then, the weight of the dried product was measured. A ratio of the weight of the dried product to the weight of the sheet introduced into DMSO was calculated. The calculated results are listed in Table 7 below as the amount of the DMSO-insoluble matter.

On the other hand, the filtrate obtained by the filtration under reduced pressure was filtered using a filter having a pore diameter of 0.2 µm, and then subjected to gel permeation chromatography (GPC measurement) under the following measurement conditions. In the obtained chromatogram, two or three types of peaks were detected. A number average molecular weight Mn and a composition ratio (%) of each peak were determined for peaks having a composition ratio of 1% or more as calculated based on the peak area. The results obtained are listed in Table 7 below as P(1), P(2) and P(3) in a descending order of molecular weight.
Measurement apparatus: trade name "HPLC-Prominence" available from Shimadzu Corporation
Column: trade name "PLGEL 20 µm MIXED-A (300 mm -7.5 m)" available from Agilent Technologies
Mobile phase: dimethyl sulfoxide (DMSO)
Flow rate: 0.5 mL/min
Column temperature: 40°C
Detector: differential refractive index detector (RID)
Retention time: 60 min
Sample injection volume: 50 µL
Standard sample: pullulan (Mw = 736000, 343000, 202000, 110000, 50600, 23000, 9900, 6600)

### Evaluation of Binding Amount of Functional Group (Degree of Formylation)

The lignocellulose-containing sheets of Examples 1 to 32 were subjected to infrared absorption spectral analysis. Specifically, as a pretreatment, the lignocellulose-containing sheets of Examples 1 to 32 were dried under reduced pressure at a temperature of 80°C for 3 hours using a vacuum dryer. Thereafter, the sheets were taken out from the vacuum dryer and immediately subjected to infrared absorption spectral analysis. A Fourier transform infrared spectrophotometer (available from PerkinElmer, Inc.) was used for the analysis. From the spectrum obtained by the ATR method, an absorbance H1 of the peak (wavelength: 1725 cm⁻¹) based on the C=O bond of the functional group (formyl group) and an absorbance H2 of the peak (wavelength 1025 cm⁻¹) based on the ether bond (C-O-C bond) of cellulose were determined, and a ratio H1/H2 of H1 to H2 was calculated. The obtained results are listed in Tables 1 to 8 below as the degree of formylation (IR).

### Evaluation of Binding State of Functional Group (Formyl Group)

About 600 mg was collected from each of the lignocellulose-containing sheets of Examples 17 to 29 and put into a vial bottle having a capacity of 50 mL. To the vial bottle, 10 ml of formic acid was added. The mixture was stirred at room temperature for 24 hours, and a re-dissolution liquid was obtained. To each re-dissolution liquid, 20 ml of 2-methyltetrahydrofuran and 80 ml of ultrapure water were added. The mixture was vigorously stirred and then centrifuged (1,2000 g, 20 minutes) and separated into three layers. The fraction components were collected from each layer and dried, and then the binding state of the functional group (formyl group) was evaluated by the method described above.

The dried 2-methyltetrahydrofuran fraction was dissolved in 0.5 ml of DMSO-d6, and measurement was performed by 2D 1H-13C HSQC, HMBC, and 3D TOCSY-HSQC. Hereinafter, Example 17 will be described. The NMR spectrum obtained in Example 17 is shown in FIG. 8. The 2D 1H-13C HSQC spectrum of the formyl groups in the Eucalyptus film formed by solubilization at 50°C is displayed in the HSQC box in the aliphatic region. The formyl proton and carbon regions of the two dimensional 1H-13C HMBC spectrum are shown in the vertical and lower horizontal rectangles, respectively. A dotted square and a circle inserted into the HSQC box indicate inter-unit correlations of β-O-4 and β-5 units with formyl groups, respectively. The circle mark indicates a contour level which is 1.7 times lower than that indicated by the square mark. The three dimensional TOCSY-HSQC spectrum was F1-F2 plane (β-5α proton resonance) at F3 = 5.44 ppm. The formylated a- and g-positions of β-O-4 were indicated by a,g-F-Aa and a,g-F-Ag1/F-Ag2, respectively, the g-position of β-5 was indicated by F-Bg2, and the 3-position of xylan was indicated by 3-F-X3 in the HSQC box, and these were confirmed as signals correlated by HMBC and TOCSY In addition, signals of β-O-4, β-5, and xylose were observed.

The dried cellulose-rich precipitate fraction of Example 17 was finely pulverized in a ball mill. This pulverized sample was dissolved in 0.5 ml of DMSO-d6:pyridine-d5 (4: 1, v/v) and sonicated for 3 hours, and the solution was measured by 2D 1H-13C HSQC and HMBC. The resulting NMR spectrum is shown in FIG. 11. The vertical rectangle of HMBC in FIG. 11 is the formyl proton region of the 2D 1H-13C HMBC spectrum. The signal resulting from formylation of glucose at the 6-position of cellulose is 6-F-C6. The a,g-F-Aa position of the β-O-4 bond of lignin was found to correlate with HMBC.

**[Table 1]**

| | | Example 1 | Example 2 | Comparative Example 1 |
|---|---|---|---|---|
| Raw material biomass | [-] | Eucalyptus (ALCA) | Eucalyptus (ALCA) | Eucalyptus |
| Pulverization method | [-] | Coarse pulverization | Coarse pulverization | Fine pulverization |
| Amount of 30oder dissolved | [mg] | 200 | 400 | 200 |
| Organic Acid | [-] | Formic acid | Formic acid | Formic acid |
| Amount of organic acid (80 wt.%) added | [ml] | 10 | 10 | 10 |
| Pressure adjustment | [-] | Pressure reduction | Pressure reduction | - |
| Dissolution temperature | [°C] | 50 | 50 | 25 |
| Dissolution time | [days] | 7 | 7 | 1 |
| Thickness | [µm] | 50.8 | 117.4 | 43.8 |
| Density | [g/cm³] | 0.54 | 0.72 | 1.20 |
| Degree of formylation (IR) | [-] | 0.75 | 1.00 | 0.68 |
| Young's modulus | [Gpa] | 0.38 | 0.19 | - |
| Maximum stress | [Mpa] | 3.9 | 1.20 | - |
| Maximum elongation | [%] | 1.33 | 0.70 | - |
| Tg(1) | [°C] | 224.1 | 215.6 | 157.7 |
| Tg(2) | [°C] | 248.1 | 242.3 | 177.9 |
| Tg(3) | [°C] | 268.2 | 266.2 | - |
| Bendability | [-] | G | G | B |

**[Table 2]**

| | | Example 3 | Example 4 | Example 5 | Example 6 | Example 7 |
|---|---|---|---|---|---|---|
| Raw material biomass | [-] | Beech | Beech | Red pine | Red pine | Bran |
| Pulverization method | [-] | Coarse pulverization | Coarse pulverization | Coarse pulverization | Coarse pulverization | Coarse pulverization |
| Amount of powder dissolved | [mg] | 200 | 400 | 200 | 400 | 200 |
| Organic Acid | [-] | Formic acid | Formic acid | Formic acid | Formic acid | Formic acid |
| Amount of organic acid (80 wt.%) added | [ml] | 10 | 10 | 10 | 10 | 10 |
| Pressure adjustment | [-] | Pressure reduction | Pressure reduction | Pressure reduction | Pressure reduction | Pressure reduction |
| Dissolution temperature | [°C] | 50 | 50 | 50 | 50 | 50 |
| Dissolution time | [days] | 7 | 7 | 7 | 7 | 7 |
| Thickness | [µm] | 25.8 | 46.2 | 31.6 | 37.8 | 14.8 |
| Density | [g/cm³] | 0.90 | 0.97 | 0.97 | 0.85 | 0.79 |
| Degree of formylation (IR) | [-] | 1.00 | 0.63 | 1.25 | 1.00 | 0.75 |
| Young's modulus | [Gpa] | 2.40 | 0.86 | 2.69 | 2.68 | 1.20 |
| Maximum stress | [Mpa] | 75.3 | 8.1 | 76.8 | 37.3 | 22.7 |
| Maximum elongation | [%] | 3.36 | 1.04 | 3.39 | 1.80 | 2.67 |
| Tg(1) | [°C] | 141.2 | 182.6 | - | - | 104.6 |
| Tg(2) | [°C] | 206.3 | 228.2 | - | - | 130.8 |
| Tg(3) | [°C] | 248.4 | 251.2 | - | - | 168 |
| Bendability | [-] | G | G | G | G | G |

**[Table 3]**

| | | Example 8 | Example 9 | Example 10 | Example 11 | Example 12 |
|---|---|---|---|---|---|---|
| Raw material biomass | [-] | Bran | Bagasse | Bagasse | Eucalyptus 2 | Eucalyptus 2 |
| Pulverization method | [-] | Coarse pulverization | Coarse pulverization | Coarse pulverization | Coarse pulverization | Coarse pulverization |
| Amount of powder dissolved | [mg] | 400 | 200 | 400 | 100 | 100 |
| Organic Acid | [-] | Formic acid | Formic acid | Formic acid | Formic acid | Formic acid |
| Amount of organic acid (80 wt.%) added | [ml] | 10 | 10 | 10 | 10 | 10 |
| Pressure adjustment | [-] | Pressure reduction | Pressure reduction | Pressure reduction | Pressure reduction | Pressure reduction |
| Dissolution temperature | [°C] | 50 | 50 | 50 | 30 | 40 |
| Dissolution time | [days] | 7 | 7 | 7 | 7 | 7 |
| Thickness | [µm] | 30.8 | 28.8 | 34.4 | 42.0 | 55.6 |
| Density | [g/cm³] | 0.44 | 1.11 | 0.82 | 0.37 | 0.56 |
| Degree of formylation (IR) | [-] | 0.41 | 0.45 | 0.43 | 0.42 | 0.80 |
| Young's modulus | [Gpa] | 1.28 | 2.53 | 3.59 | 0.33 | 1.75 |
| Maximum stress | [Mpa] | 28.3 | 47.2 | 60.4 | 3.09 | 31.15 |
| Maximum elongation | [%] | 3.34 | 4.51 | 3.27 | 1.16 | 2.73 |
| Tg(1) | [°C] | 108.9 | 114.6 | 122.9 | 230 | 239 |
| Tg(2) | [°C] | 135.5 | 139.4 | 154.8 | 143 | 243 |
| Tg(3) | [°C] | 170.9 | 161.5 | 176.8 | - | - |
| Bendability | [-] | G | G | G | G | G |

**[Table 4]**

| | | Example 13 | Example 14 | Example 15 | Example 16 | Comparative Example 2 |
|---|---|---|---|---|---|---|
| Raw material biomass | [-] | Cedar (sapwood) | Cedar (heartwood) | Cedar (sapwood) | Cedar (heartwood) | Cedar |
| Pulverization method | [-] | Coarse pulverization | Coarse pulverization | Coarse pulverization | Coarse pulverization | Fine pulverization |
| Amount of powder dissolved | [mg] | 100 | 100 | 100 | 100 | 200 |
| Organic Acid | [-] | Formic acid | Formic acid | Formic acid | Formic acid | Formic acid |
| Amount of organic acid (80 wt.%) added | [ml] | 10 | 10 | 10 | 10 | 10 |
| Pressure adjustment | [-] | Pressure reduction | Pressure reduction | Pressure reduction | Pressure reduction | - |
| Dissolution temperature | [°C] | 30 | 30 | 40 | 40 | 25 |
| Dissolution time | [days] | 7 | 7 | 7 | 7 | 1 |
| Thickness | [µm] | 36.2 | 96.6 | 82.4 | 90.8 | 36.6 |
| Density | [g/cm³] | 0.54 | 0.26 | 0.52 | 0.50 | 1.28 |
| Degree of formylation (IR) | [-] | 0.45 | 0.75 | 0.71 | 0.89 | 0.92 |
| Young's modulus | [Gpa] | 0.21 | 0.08 | 0.69 | 0.45 | - |
| Maximum stress | [Mpa] | 2.17 | 0.59 | 10.61 | 6.10 | - |
| Maximum elongation | [%] | 1.19 | 1.10 | 1.94 | 1.68 | - |
| Tg(1) | [°C] | 245 | - | 251 | 269 | 160.5 |
| Tg(2) | [°C] | 265 | - | - | 124 | 183.4 |
| Tg(3) | [°C] | - | - | - | - | - |
| Bendability | [-] | G | G | G | G | B |

**[Table 5]**

| | | Example 17 | Example 18 | Example 19 |
|---|---|---|---|---|
| Raw material biomass | [-] | Eucalyptus | Cedar (sapwood) | Cedar (heartwood) |
| Pulverization method | [-] | Coarse pulverization | Coarse pulverization | Coarse pulverization |
| Amount of powder dissolved | [mg] | 100 | 100 | 100 |
| Organic Acid | [-] | Formic acid | Formic acid | Formic acid |
| Amount of organic acid (80 wt.%) added | [ml] | 10 | 10 | 10 |
| Pressure adjustment | [-] | Pressure reduction | Pressure reduction | Pressure reduction |
| Dissolution temperature | [°C] | 50 | 50 | 50 |
| Dissolution time | [days] | 7 | 7 | 7 |
| Thickness | [µm] | 14.2 | 31.4 | 28.2 |
| Density | [g/cm³] | 0.72 | 0.65 | 0.64 |
| Degree of formylation (IR) | [-] | 0.60 | 0.75 | 0.58 |
| Young's modulus | [Gpa] | 3.10 | 0.48 | 0.61 |
| Maximum stress | [Mpa] | 60.98 | 5.49 | 7.15 |
| Maximum elongation | [%] | 3.21 | 1.35 | 1.41 |
| Tg(1) | [°C] | 118 | 261 | 276 |
| Tg(2) | [°C] | 175 | 118 | 114 |
| Tg(3) | [°C] | 177 | - | - |

**[Table 6]**

| | | Example 21 | Example 22 | Example 23 | Example 24 |
|---|---|---|---|---|---|
| Raw material biomass | [-] | Eucalyptus | Eucalyptus | Cedar | Cedar |
| Pulverization method | [-] | Coarse pulverization | Coarse pulverization | Coarse pulverization | Coarse pulverization |
| Amount of powder dissolved | [mg] | 200 | 400 | 200 | 400 |
| Organic Acid | [-] | Formic acid | Formic acid | Formic acid | Formic acid |
| Amount of organic acid (80 wt.%) added | [ml] | 10 | 10 | 10 | 10 |
| Amount of metal salt added | [mg] | 0 | 7.5 | 0 | 7.5 |
| Pressure adjustment | [-] | Pressure reduction | Pressure reduction | Pressure reduction | Pressure reduction |
| Dissolution temperature | [°C] | 50 | 50 | 50 | 50 |
| Dissolution time | [days] | 7 | 7 | 7 | 7 |
| Thickness | [µm] | 35.8 | 43.6 | 54.0 | 85.8 |
| Density | [g/cm³] | 0.79 | 0.90 | 0.73 | 0.46 |
| Degree of formylation (IR) | [-] | 0.33 | 0.30 | 0.31 | 0.27 |
| Young's modulus | [Gpa] | 2.94 | 2.89 | 1.46 | 1.52 |
| Maximum stress | [Mpa] | 39.3 | 34.9 | 20.0 | 16.3 |
| Maximum elongation | [%] | 1.84 | 1.54 | 1.92 | 1.41 |
| Tg(1) | [°C] | 160 | 216 | - | 249 |
| Tg(2) | [°C] | 188 | 229 | - | 254 |
| Tg(3) | [°C] | 192 | 230 | - | 275 |

**[Table 7]**

| | | | Example 25 | Example 26 | Example 27 | Example 28 | Example 29 |
|---|---|---|---|---|---|---|---|
| Raw material biomass | | [-] | Eucalyptus (ALCA) | Eucalyptus (ALCA) | Eucalyptus (ALCA) | Eucalyptus (ALCA) | Eucalyptus (ALCA) |
| Pulverization method | | [-] | Coarse pulverization | Coarse pulverization | Coarse pulverization | Coarse pulverization | Coarse pulverization |
| Amount of powder dissolved | | [mg] | 800 | 800 | 800 | 800 | 800 |
| Formic acid/water mixing weight ratio | | [-] | 80/20 | 85/15 | 95/5 | 98/2 | 100 |
| Amount of formic acid solution added | | [g] | 19.2 | 19.2 | 19.2 | 19.2 | 19.2 |
| Pressure adjustment | | [-] | Pressure reduction | Pressure reduction | Pressure reduction | Pressure reduction | Pressure reduction |
| Dissolution temperature | | [°C] | 50 | 50 | 50 | 50 | 50 |
| Dissolution time | | [days] | 14 | 14 | 14 | 14 | 14 |
| Thickness | | [µm] | 73 | 42 | 110 | 72 | 78 |
| Density | | [g/cm³] | 0.87 | 0.92 | 0.78 | 0.79 | 1.08 |
| Number average molecular weight (GPC) | P(1) | [-] | 381,000 | 1,430,000 | 2,390,000 | 1,870,000 | 2,910,000 |
| | P(2) | [-] | 1,140 | 12,900 | 1,120 | 1,420 | 1,830 |
| | P(3) | [-] | 290 | 350 | 320 | 330 | - |
| Peak intensity ratio (GPC) | P(1) | [%] | 80 | 69 | 87 | 76 | 60 |
| | P(2) | [%] | 12 | 2 | 10 | 23 | 40 |
| | P(3) | [%] | 8 | 29 | 3 | 1 | - |
| Amount of insoluble matter (DMSO) | | [%] | 60.8 | 51.0 | 27.5 | 11.3 | 7.7 |
| Degree of formylation (IR) | | [-] | 0.26 | 0.33 | 0.34 | 0.40 | 0.52 |

**[Table 8]**

| | | Example 30 | Example 31 | Example 32 |
|---|---|---|---|---|
| Raw material biomass | [-] | Eucalyptus (ALCA) | Eucalyptus (ALCA) | Eucalyptus (ALCA) |
| Pulverization method | [-] | Coarse pulverization | Coarse pulverization | Coarse pulverization |
| Amount of powder dissolved | [mg] | 200 | 200 | 200 |
| Formic acid/water mixing weight ratio | [-] | 65/35 | 75/25 | 80/20 |
| Amount of formic acid solution added | [g] | 9.8 | 9.8 | 9.8 |
| Pressure adjustment | [-] | Pressure reduction | Pressure reduction | Pressure reduction |
| Dissolution temperature | [°C] | 50 | 50 | 50 |
| Dissolution time | [days] | 7 | 7 | 7 |
| Thickness | [µm] | 43 | 41 | 41 |
| Degree of formylation (IR) | [-] | 0.41 | 0.39 | 0.36 |
| Density | [g/cm³] | 1.55 | 0.98 | 1.59 |
| Maximum stress | [Mpa] | 16.8 | 12.1 | 7.4 |
| Maximum elongation | [%] | 3.18 | 1.87 | 2.4 |
| Bendability | [-] | G | G | G |

As listed in Tables 1 to 8, according to the production method of the Examples, a lignocellulose solution and a molded article can be obtained without using a chemical having a heavy environmental load and without requiring fine pulverization of the raw material biomass. From the results listed in Table 8, it can be confirmed that a lower organic acid concentration tends to result in a higher maximum stress of the molded article. As shown in FIGS. 4 to 6, the lignocellulose-containing sheet of Example 1 contains fibrous materials derived from lignocellulose in the raw material biomass, unlike Comparative Example 1. Accordingly, it is considered that, in the lignocellulose-containing sheet of Example 1, lightweight properties due to low density, excellent heat resistance due to high glass transition temperature, and good bending resistance were achieved as compared with the Comparative Examples.

From the above evaluation results, the superiority of the present disclosure is clear. The production method of the present disclosure can be applied to utilization of various biomasses containing lignocellulose.

### Disclosure Item

Each of the following items is disclosure of a preferred embodiment.

[Item 1] A method for producing a lignocellulose solution, the method including:
coarsely pulverizing a biomass containing lignocellulose to obtain a coarse powder;
mixing the coarse powder and an organic acid; and
dissolving the coarse powder in the organic acid.

[Item 2] The production method according to Item 1, wherein the coarse powder contains particles having a particle size of 0.35 mm or more.

[Item 3] The production method according to Item 1 or 2, wherein the organic acid is an α-keto acid or a carboxylic acid having a formyl group.

[Item 4] The production method according to any one of Items 1 to 3, wherein the organic acid is selected from the group consisting of formic acid, glyoxylic acid, and pyruvic acid.

[Item 5] The production method according to any one of Items 1 to 4, further including preparing an organic acid solution by dissolving the organic acid in a solvent,
wherein the organic acid solution is added to the coarse powder in the mixing.

[Item 6] The production method according to Item 5, wherein the organic acid solution has a concentration of less than 75 mass%.

[Item 7] The production method according to any one of Items 1 to 6, wherein, in the dissolution, the organic acid is used in combination with a metal salt represented by a general formula M^{a}M^{b}(SO₄)₂, where M^{a} is a trivalent metal, and M^{b} is NH₄ or a monovalent metal.

[Item 8] The production method according to Item 7, wherein the metal salt is aluminum potassium sulfate.

[Item 9] The method for producing a lignocellulose solution according to any one of Items 1 to 8, the method further including pressure adjustment of reducing or increasing pressure before and/or after the mixing.

[Item 10] The production method according to Item 9, wherein the pressure is reduced in a range of 1.0 kPa or more and 10.0 kPa or less (absolute pressure) in the pressure adjustment.

[Item 11] The production method according to Item 9, wherein the pressure is increased in a range of 200 kPa or more and 1000 kPa or less (gauge pressure) in the pressure adjustment.

[Item 12] The production method according to any one of Items 1 to 11, wherein a dissolution temperature in the dissolution is 100°C or lower.

[Item 13] A lignocellulose solution produced by the production method described in any one of Items 1 to 12.

[Item 14] A lignocellulose-containing molded article formed from the lignocellulose solution described in Item 13.

[Item 15] A lignocellulose-containing molded article containing lignocellulose as a main component, having a density of less than 1.20 g/cm³, and substantially free of an adhesive component.

[Item 16] A lignocellulose-containing molded article containing lignocellulose as a main component and having a density of less than 1.20 g/cm³,
wherein at least parts of cellulose, hemicellulose and lignin constituting the lignocellulose form an ester bond with an organic acid.

[Item 17] The lignocellulose-containing molded article according to Item 15 or 16,
wherein a functional group represented by the following formula (1) is bound to at least some of hydroxyl groups of the cellulose, the hemicellulose, and the lignin constituting the lignocellulose, 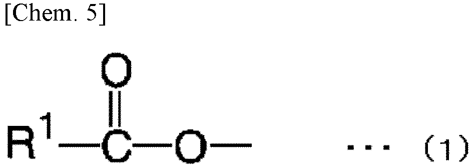
where R¹ is a hydrogen atom or a functional group represented by the following formula (2) where R² is a hydrogen atom or a methyl group.

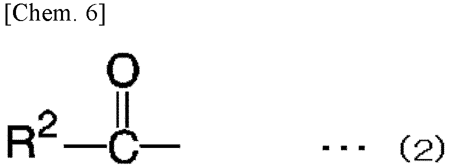

[Item 18] A lignocellulose-containing molded article containing lignocellulose as a main component and having a density of less than 1.60 g/cm³, wherein
a functional group represented by the following formula (1) is bound to at least some of hydroxyl groups of cellulose, hemicellulose and lignin constituting the lignocellulose, 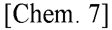 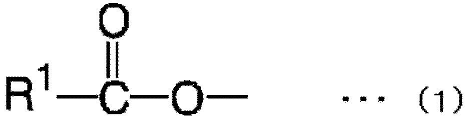
where R¹ is a hydrogen atom or a functional group represented by the following formula (2) where R² is a hydrogen atom or a methyl group, 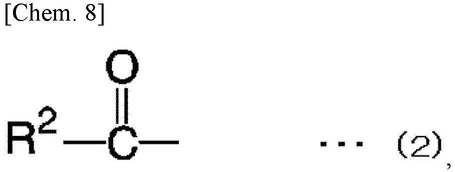 and
a binding amount of the functional group as determined from an infrared absorption spectrum is 0.35 or more and 0.60 or less.

[Item 19] The lignocellulose-containing molded article according to any one of Items 15 to 18, further containing a metal salt represented by a general formula M^{a}M^{b}(SO₄)₂, where M^{a} is a trivalent metal, and M^{b} is NH₄ or a monovalent metal.

[Item 20] The lignocellulose-containing molded article according to any one of Items 15 to 19, containing a fibrous material derived from the lignocellulose.

[Item 21] The lignocellulose-containing molded article according to any one of Items 15 to 20, which is a sheet or film.

[Item 22] The lignocellulose-containing molded article according to Item 21, which does not crack when bent at an angle of 90 degrees or more.

[Item 23] The lignocellulose-containing molded article according to any one of Items 15 to 22, which has a glass transition temperature Tg of 200°C or higher.

[Item 24] The lignocellulose-containing molded article according to any one of Items 15 to 23, wherein an amount of an insoluble matter as determined by the following dissolution test is 5 mass% or less,
(dissolution test)
a coarse powder obtained by coarsely pulverizing the molded article is mixed with 50 parts by weight of an organic acid relative to 1 part by weight of the coarse powder and dissolved therein; and the obtained dissolution liquid is passed through a 20-mesh sieve, a weight of a residue remaining on the sieve is measured, and a proportion (unit: mass%) of the residue to the coarse powder mixed with the organic acid is determined as the amount of the insoluble matter.

[Item 25] The lignocellulose-containing molded article according to any one of Items 15 to 24, wherein the lignocellulose is a solubilized lignocellulose.

[Item 26] The lignocellulose-containing molded article according to any one of claims 15 to 25,
wherein the lignocellulose contains one or more selected from the group consisting of:
(1) cellulose in which at least a part of 6-position of a glucose residue is esterified with the organic acid,
(2) hemicellulose having, as a main skeleton, xylan in which at least a part of 3-position of a xylose residue is esterified with the organic acid, and
(3) lignin in which at least parts/part of α-position and/or γ-position of binding sites β-0-4 and β-5 are/is esterified with the organic acid.

## Claims

1. A method for producing a lignocellulose solution, the method comprising:
coarsely pulverizing a biomass containing lignocellulose to obtain a coarse powder;
mixing the coarse powder and an organic acid to obtain a lignocellulose mixture; and
dissolving the coarse powder in the organic acid to obtain the lignocellulose solution.

2. The production method according to claim 1, wherein the coarse powder comprises particles having a particle size of 0.35 mm or more.

3. The production method according to claim 1, wherein the organic acid is an α-keto acid or a carboxylic acid having a formyl group.

4. The production method according to claim 1, wherein the organic acid is selected from the group consisting of formic acid, glyoxylic acid, and pyruvic acid.

5. The production method according to claim 1, further comprising preparing an organic acid solution by dissolving the organic acid in a solvent,
wherein the organic acid solution is added to the coarse powder in the mixing.

6. The production method according to claim 5, wherein the organic acid solution has a concentration of less than 75 mass%.

7. The production method according to claim 1, wherein, in the dissolution, the organic acid is used in combination with a metal salt represented by a general formula M^{a}M^{b}(SO₄)₂, where M^{a} is a trivalent metal, and M^{b} is NH₄ or a monovalent metal.

8. The production method according to claim 7, wherein the metal salt is aluminum potassium sulfate.

9. The method for producing a lignocellulose solution according to claim 1, the method further comprising pressure adjustment of the coarse powder by reducing or increasing pressure over the coarse powder or the lignocellulose mixture before and/or after the mixing.

10. The production method according to claim 9, wherein the pressure is reduced to a range of 1.0 kPa or more and 10.0 kPa or less (absolute pressure) in the pressure adjustment.

11. The production method according to claim 9, wherein the pressure is increased to a range of 200 kPa or more and 1000 kPa or less (gauge pressure) in the pressure adjustment.

12. The production method according to claim 9, wherein, the method further comprising the pressure adjustment of the coarse powder by reducing or increasing pressure over the lignocellulose mixture after the mixing.

13. The production method according to claim 1, wherein a dissolution temperature in the dissolution is 100°C or lower.

14. A lignocellulose-containing molded article comprising lignocellulose as a main component, having a density of less than 1.20 g/cm³, and substantially free of an adhesive component,
wherein the lignocellulose comprises cellulose, hemicellulose, and lignin which are natural polymers, and a functional group represented by the following formula (1) is bound to at least some of hydroxyl groups of the cellulose, the hemicellulose, and the lignin, 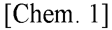 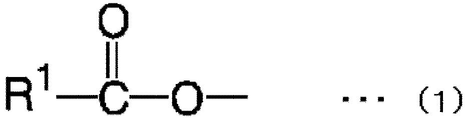
where R¹ is a hydrogen atom or a functional group represented by the following formula (2) where R² is a hydrogen atom or a methyl group,

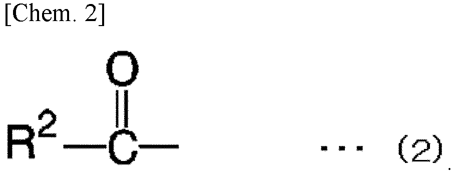

15. A lignocellulose-containing article comprising lignocellulose as a main component and having a density of less than 1.20 g/cm³,
wherein the lignocellulose comprises cellulose, hemicellulose, and lignin which are natural polymers, and at least parts of the cellulose, the hemicellulose, and the lignin form an ester bond with an organic acid.

16. The lignocellulose-containing article according to claim 15,
wherein a functional group represented by the following formula (1) is bound to at least some of hydroxyl groups of cellulose, hemicellulose, and lignin constituting the lignocellulose, 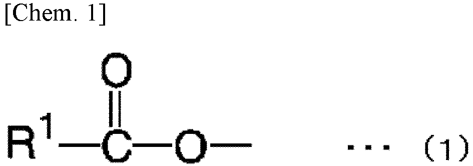
where R¹ is a hydrogen atom or a functional group represented by the following formula (2) where R² is a hydrogen atom or a methyl group,

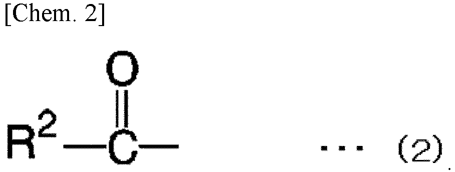

17. The lignocellulose-containing article according to claim 15, further comprising a metal salt represented by a general formula M^{a}M^{b}(SO₄)₂, where M^{a} is a trivalent metal, and M^{b} is NH₄ or a monovalent metal.

18. The lignocellulose-containing article according to claim 14, wherein the article has a glass transition temperature Tg of 200°C or higher.

19. The lignocellulose-containing article according to claim 14, wherein an amount of an insoluble matter as determined by the following dissolution test is 5 mass% or less,
dissolution test:
a coarse powder obtained by coarsely pulverizing the article is mixed with 50 parts by weight of an organic acid relative to 1 part by weight of the coarse powder and dissolved therein; and the obtained dissolution liquid is passed through a 20-mesh sieve, a weight of a residue remaining on the sieve is measured, and a proportion (unit: mass%) of the residue to the coarse powder mixed with the organic acid is determined as the amount of the insoluble matter.

20. The lignocellulose-containing article according to claim 14,
wherein the lignocellulose comprises one or more selected from the group consisting of:
(1) cellulose in which at least a part of 6-position of a glucose residue is esterified with the organic acid,
(2) hemicellulose having, as a main skeleton, xylan in which at least a part of 3-position of a xylose residue is esterified with the organic acid, and
(3) lignin in which at least parts/part of α-position and/or γ-position of binding sites β-0-4 and β-5 are/is esterified with the organic acid.
